# EUROPEAN PATENT APPLICATION

(11) **EP 2 012 216 A1**
(43) Date of publication of application: **07.01.2009**
(21) Application number: 08386011.4
(22) Date of filing: 20.06.2008
(51) Int. Cl.: G06F 1/16, H04M 1/02

(54) **Method circuit ans system for interfacing with an electronic device**

(30) Priority: 21.06.2007 US 766409
(71) Applicant: Emblaze Mobile Ltd., 43662 Industrial Area Ra'anana (IL)
(72) Inventor: Reifman, Eli, Ra'anana 43662 (IL)
(74) Representative: Masoulas, Athanasios V.

(57) **Abstract**

According to some embodiments of the present invention, there is provided an interface apparatus for a multi-application electronic device, including a human interface surface having integrated presentation and sensing elements, such that the device has substantially full functionality for substantially all applications without the use of other human interfaces.

## Description

### TECHNICAL FIELD

The present invention generally relates to the field of electronics. More specifically, the present invention relates to a method circuit and system for facilitating human interface with electronic devices such as mobile devices, cell phones, Personal Digital Assistants ("PDA"), digital cameras, or any integrated combination of electronic devices.

### BACKGROUND

In recent decades, electronic technology, including communication technology, has revolutionized our everyday lives. Electronic devices such as PDA's, cell phones, mobile media players and digital cameras have permeated the lives of almost every person living in the developed world - and quite a number of people living in undeveloped countries. Mobile communication and computing devices, especially, have become the means by which countless millions conduct their personal and professional interactions with the world. It has become almost impossible for many people, especially those in the business world, who use these devices as a means to improve productivity, to function without access to their electronic devices.

However, with this tremendous proliferation in the use of electronic devices, there has developed a tradeoff between enhanced productivity and simplicity or convenience. With people's ever growing dependence on electronic device such as cell phones and PDA's, comes a need for users of these devices to carry more and more such devices. The necessity to carry multiple devices often leads to problems such as: (1) easy misplacement or loss of devices, (2) conflicting data residing on one or more devices, and (3) general inconvenience associated with having to store and carry objects.

Manufacturers of electronic devices have recognized some of the issues stemming from the need to carry multiple devices, and have attempted to integrate two or more such devices into a single package or integrated device. The solutions to date, however, have been clumsy and have failed to provided favorable results. One of the major problems associated with integrating multiple devices into one package relates to the fact that each type of device (e.g. cell phone, PDA etc.) usually has a unique human interface to which people have become accustomed and which they associate with the given device type. While attempting to integrate multiple devices into a single package, manufacturers have thus far been unable to find a means by which to seamlessly incorporate the various human interfaces associated with each of the devices such that both functionally and appearance are maintained.

Thus, there is a need for an improved method, apparatus and system by which multiple devices may be integrated into one package.

### SUMMARY

The present invention is a method, apparatus and system for human interface with a multifunction/application electronic device. According to some embodiments of the present invention, there is provided a human interface surface comprising integrated presentation and sensing elements adapted to provide its respective device substantially full functionality for substantially all the device's functions and applications, without the use of other human interface elements. The presentation elements and the sensing elements may integrated into a single substrate material or may part of separate substrates which are mechanically attached to one another in an overlapping manner.

According to further embodiments of the present invention, there is provided a controller adapted to send one or more presentation signals to the presentation elements of the human interface surface based at least partially on data stored in a presentation configuration table and based on a current state of the device. The current state of the device may be determined based on one or more signals received from the sensing elements and/or based on one or more signals received from the device.

According to further embodiments of the present invention, the controller may associate a function with each of one or more signals received from the sensing elements, wherein the association of a function is at least partially based on data from a sensing element configuration table, wherein the data selected from the sensing element configuration table may be correlated to data from the presentation configuration used by the controller to send one or more signals to the presentations elements.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1A shows a prospective view with a cutaway of a mobile device having an interface surface according to some embodiments of the present invention;
FIG. 1B shows a prospective view of a mobile device having an interface surface according to some embodiments of the present invention, wherein the device is configured to operate as a mobile phone;
FIG. 1C shows a prospective view of a mobile device having an interface surface according to some embodiments of the present invention, wherein the device is configured to operate as a media player;
FIG. 1D shows a prospective view of a mobile device having an interface surface according to some embodiments of the present invention, wherein the device is configured to operate as a digital personal organizer;
FIG. 2 shows a block diagram of an exemplary mobile device according to some embodiments of the present invention, including an interface surface and various electrical functional blocks to drive and interact the interface surface;
FIG. 3 shows a block diagram of an exemplary data structure of a configuration database according to some embodiments of the present invention;
FIG. 4 shows a flow diagram including the step of an exemplary method of operating a mobile device according to some embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

The present invention is a method, apparatus and system for human interface with a multifunction/application electronic device. According to some embodiments of the present invention, there is provided a human interface surface comprising integrated presentation and sensing elements adapted to provide its respective device substantially full functionality for substantially all the device's functions and applications, without the use of other human interfaces elements. The presentation elements and the sensing elements may integrated into a single substrate material or may part of separate substrates which are mechanically attached to one another in an overlapping manner.

According to further embodiments of the present invention, there is provided a controller adapted to send one or more presentation signals to the presentation elements of the human interface surface based at least partially on data stored in a presentation configuration table and based on a current state of the device. The current state of the device may be determined based on one or more signals received from the sensing elements and/or based on one or more signals received from the device.

According to further embodiments of the present invention, the controller may associate a function with each of one or more signals received from the sensing elements, wherein the association of a function is at least partially based on data from a sensing element configuration table, wherein the data selected from the sensing element configuration table may be correlated to data from the presentation configuration used by the controller to send one or more signals to the presentations elements.

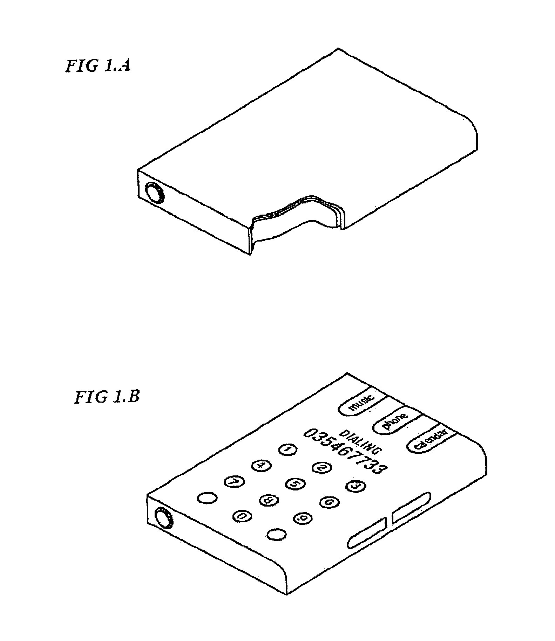

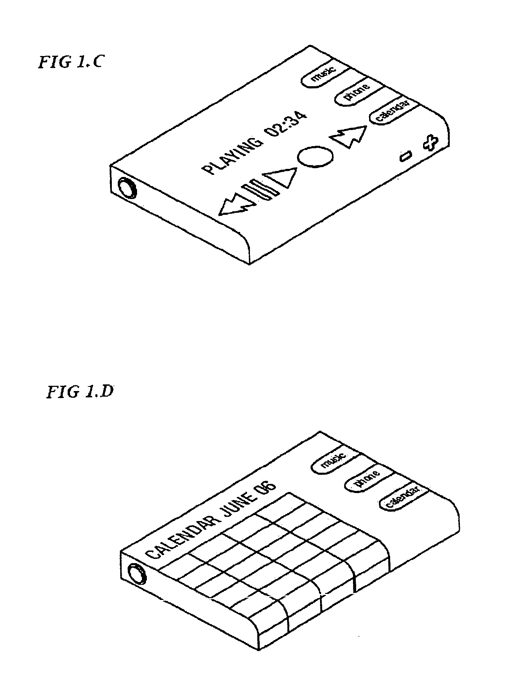

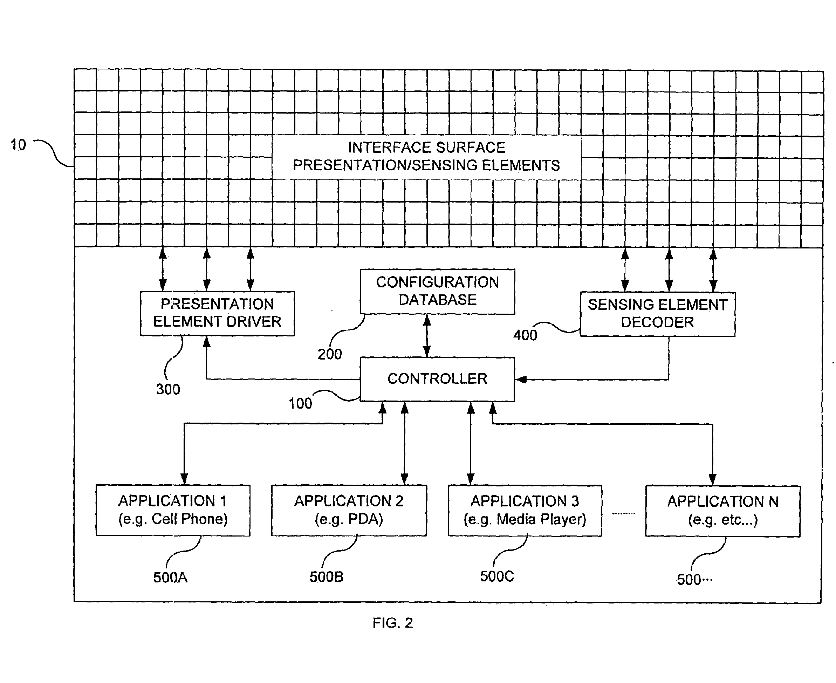

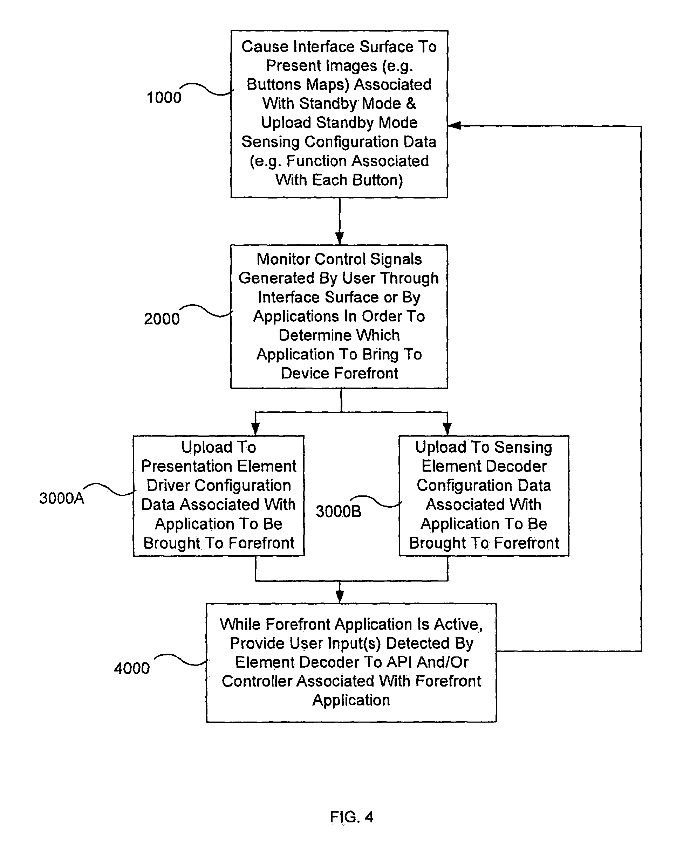

Turning now to FIG. 2, there is shown a block diagram of an exemplary mobile device according to some embodiments of the present invention, including an interface surface and various electrical functional blocks to drive and interact the interface surface. The functionally of the device 10 shown in Fig. 2 will now be described in view of the flow chart of Fig. 4 and using the prospective views of Figs. 1A through 1D.

The exemplary device may include a controller 100 adapted to regulate signals to a presentation element driver 300, which presentation element driver 300 may be functionally associated with presentation elements (e.g. Light Emitting Diodes, LCD, etc..) of an interface surface 10. The controller may also be adapted to receive signals from a sensing element decoder 400, which decoder 400 is functionally associated with sensing elements (e.g. touch sensors, etc.) of the interface surface.

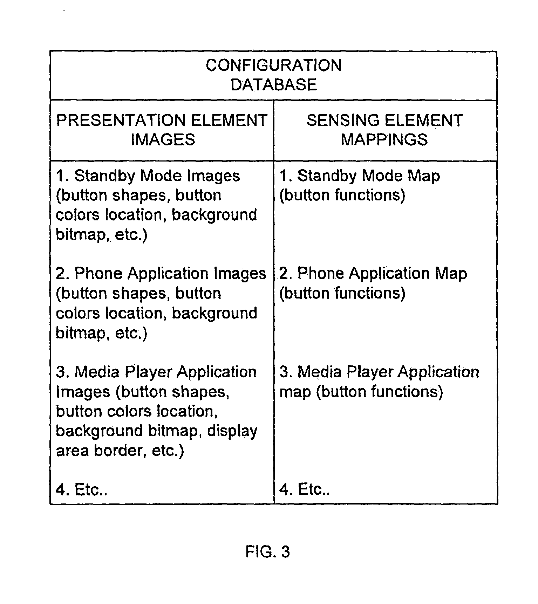

A configuration database 200 may include information used by the controller 100 in regulating signal flow to the presentation element driver. As shown in Fig. 3, the configuration database 300 may include such information as interface element (e.g. buttons or display area) shape and location, display properties, etc.., for each of the applications 500A through 500N installed on the device. It should be understood by one of ordinary skill in the art that interface elements such as buttons and displays mentioned above are not physical buttons or displays, but rather virtual elements projected through the presentation surface 10. FIG. 1A shows an embodiment of an exemplary device according to some embodiments of the present invention where no display elements are being projected through the presentation surface. This embodiment may indicate the device is either shut off or in standby/hibernate mode.

For each given application 500A through 500N, the configuration database 200 may also include sensing element mapping information corresponding to presentation information/elements associated with given application to specific functions. The controller 100 may use the mapping information to determine which interface element is interacted with by the user and which function that interaction is meant to trigger. For example, as shown in Fig. 1B, the configuration database 200 may provide the controller 100 with: (1) presentation information associated with projected buttons on a phone dialing keypad, and (2) the sensing information may map sensing elements corresponding to each projected button with the number on the button.

Turning now to Fig. 4, there is shown a flow diagram including the step of an exemplary method of operating a mobile device according to some embodiments of the present invention. Step 1000 may correspond to the initialization (e.g. turning on) or standby mode of the device. Figs. 1B through 1D show application selection buttons on the upper edge of the front surface of the device, which buttons may be interacted with by the user and monitored by the controller 100 to determining which application the device will run in the forefront (step 2000).

Once an application (e.g. phone, calendar, media player) is selected, presentation information associated with the selected application may be uploaded 3000A to the presentation element driver 300 and sensing element mapping information may be uploaded 3000B to sensing element decoder 400. User interaction with the device interface surface 10 may be mapped to device functions using the mapping information associated with the application in the forefront 4000. An Application Interface ("APT") may provide the selected functions to the relevant application.

While certain features of the invention have been illustrated and described herein, many modifications, substitutions, changes, and equivalents will now occur to those skilled in the art. It is, therefore, to be understood that the appended claims are intended to cover all such modifications and changes as fall within the true spirit of the invention.

## Claims

1. An interface surface for an electronic device, the interface surface comprising at least one integrated presentation element for presenting data to a user.

2. The interface surface of claim 1 further comprising at least one integrated sensing element for receiving data from the user.

3. The interface surface of claim 1 wherein the interface surface is made of a single substrate.

4. The interface surface of claim 1 wherein the device is functional for at least two applications.

5. The interface surface of claim 4 wherein at least one of the at least two applications is selected from the group consisting of: mobile phone functionality; digital personal organizer functionality; and media playing functionality.

6. An electronic device comprising:
an interface surface comprising at least one integrated presentation element for presenting information to a user;
a controller for sending and receiving signals from the at least one integrated presentation element; and
at least one component for enabling the electronic device to supply at least one functionality.

7. The electronic device of claim 6 wherein the at least one functionality is selected from the group consisting of: mobile phone functionality; digital personal organizer functionality; and media playing functionality.

8. The electronic device of claim 6 further comprising a presentation element driver for receiving signals from the at least one integrated presentation element.

9. The electronic device of claim 6 further comprising at least one integrated sensing element for receiving information from the user.

10. The electronic device of claim 9 further comprising a sensing element driver for transferring signals to the at least one integrated sensing element.

11. The electronic device of claim 9 wherein the at least one integrated presentation element or the at least one integrated sensing element are operated using mapping information relating the at least one integrated presentation element or the at least one integrated sensing element, to the at least one functionality.

12. An electronic device comprising:
an interface surface comprising at least one integrated presentation element and at least one integrated sensing element;
a controller for sending and receiving signals from the at least one integrated presentation element and at least one integrated sensing element;
at least one component for supplying the electronic device with at least one functionality, selected from the group consisting of: mobile phone functionality; digital personal organizer functionality; and media playing functionality;
a presentation element driver for transferring signals to the at least one presentation element; and
a sensing element driver for transferring signals to the at least one sensing element;
wherein the at least one integrated presentation element or the at least one integrated sensing element are operated using mapping information relating the at least one integrated presentation element or the at least one integrated sensing element, to the at least one functionality.

13. A method of operating an electronic device comprising an interface surface, the method comprising:
receiving data from a user through a sensing element integrated with the interface surface; and
providing to a user at least one of at least two functionalities enabled by the device.

14. The method of claim 13 further comprising a step of presenting data to a user through a presentation element integrated with the interface surface of the device.

15. A method of operating an electronic device comprising an interface surface, the method comprising:
presenting data to a user through at least one presentation element integrated into the interface surface of the device;
receiving data from a user through at least one sensing element integrated into the interface surface; and
providing to a user at least one of at least two functionalities enabled by the device,
wherein the data presented to the user is determined using mapping information relating the at least one integrated presentation element or the at least one integrated sensing element, to the at least one functionality.
